# EUROPÄISCHE PATENTSCHRIFT

(11) **EP 4 609 488 B1**
(45) Veröffentlichungstag und Bekanntmachung des Hinweises auf die Patenterteilung: **09.12.2026**
(21) Anmeldenummer: 23783841.2
(22) Anmeldetag: 04.10.2023
(51) Int. Cl.: H02K 1/16, H02K 3/24, H02K 3/48, H02K 9/197, H02K 3/487

(54) **STATOR EINER ELEKTRISCHEN MASCHINE**
STATOR OF AN ELECTRIC MACHINE
STATOR D'UNE MACHINE ÉLECTRIQUE

(30) Priorität: 28.10.2022 DE 102022211493
(43) Veröffentlichungstag der Anmeldung: 03.09.2025
(73) Patentinhaber: Robert Bosch GmbH, 70442 Stuttgart (DE)
(72) Erfinder: BENSING, Felix, 70437 Stuttgart (DE); STAMMLER, Jannik, 70197 Stuttgart (DE); RIEDL, Johannes, 86673 Bergheim (DE); KUEHBACHER, Daniel, 70569 Stuttgart (DE)
(86) Internationale Anmeldenummer: PCT/EP2023/077389
(87) Internationale Veröffentlichungsnummer: WO 2024/088714

(56) Entgegenhaltungen:
- DE-A1- 102019 122 446
- US-A- 4 323 802
- US-A1- 2022 247 248
- US-A1- 2022 311 297

## Beschreibung

### Stand der Technik

Die Erfindung geht aus von einem Stator einer elektrischen Maschine nach der Gattung des Hauptanspruchs.

Es ist schon ein Stator einer elektrischen Maschine aus der DE102019113785 A1 bekannt, mit einer Statorachse und mit einem Statorblechpaket, an dem Statorzähne und zwischen den Statorzähnen liegende Statornuten ausgebildet sind und das eine Vielzahl von Blechlamellen umfasst, wobei sich die Statornuten in radialer Richtung bezüglich der Statorachse jeweils zwischen einem Nutgrund und einem Nutkopf erstrecken, wobei in den Statornuten jeweils ein einziger Leiter oder ein mehrere Leiter umfassendes Leiterbündel, insbesondere ein Stapel von Flachdrahtleitern, zur Bildung einer elektrischen Statorwicklung vorgesehen ist, wobei in den Statornuten jeweils mehrere, in axialer Richtung bezüglich der Statorachse voneinander beabstandete Stützstellen zur Einklemmung des in der jeweiligen Statornut liegenden Leiters bzw. Leiterbündels gebildet sind, wobei zwischen den Flanken der jeweiligen Statornut und dem in der Statornut angeordneten Leiter bzw. Leiterbündel zumindest ein Nutspalt vorgesehen ist, der einen sich in axialer Richtung erstreckenden Nutspaltkanal bildet, der entlang eines Nut-Kühlpfads von einem Kühlmedium durchströmbar ist. Die Stützstellen sind jeweils an einer als Klemmstatorblech bezeichneten Sonderlamelle des Blechpakets ausgebildet, indem jeweils eine Klemmkontur umfassend mehrere Klemmvorsprünge vorgesehen ist. Die Sonderlamellen unterscheiden sich gegenüber den übrigen Blechlamellen des Blechpakets. Die Leiterbündel müssen jeweils in axialer Richtung bezüglich der Statorachse in die Statornuten eingeschoben und dabei unter der Wirkung von Klemmkräften durch die klemmenden Klemmkonturen hindurch bewegt werden. Dabei können die Leiterbündel, insbesondere deren elektrische Isolation, beschädigt werden. Die Dokumente US 2022/311297 A1 und DE 10 2019 122446 A1 beschreiben weitere Beispiele für die Kühlung von Leitern in Statornuten.

Aus der DE102018101640 A1 ist eine elektrische Maschine bekannt, bei der ein Statorraum gegenüber einem Rotorraum mittels eines Spaltrohres abgedichtet ist.

### Vorteile der Erfindung

Der erfindungsgemäße Stator mit den kennzeichnenden Merkmalen des Hauptanspruchs hat demgegenüber den Vorteil, dass die Stützstellen ohne Sonderlamellen erzeugbar und die Leiterbündel bei der Montage ohne Klemmkräfte in die Statornuten einführbar sind. Auf diese Weise werden die Herstellungskosten des Stators verringert. Außerdem werden Beschädigungen der Leiterbündel beim Einführen der Leiterbündel in die jeweiligen Statornuten vermieden.

Dies wird erfindungsgemäß erreicht, indem die Stützstellen jeweils durch das Verdrehen von einzelnen oder mehreren Blechlamellen des Blechpaketes, insbesondere von einer Gruppe oder von mehreren Gruppen von Blechlamellen, gebildet sind.

Der erfindungsgemäße Stator mit den kennzeichnenden Merkmalen des Hauptanspruchs hat weiterhin den Vorteil, dass der Kühlpfad im Stator vereinfacht wird hinsichtlich der Strömungsanbindung der Nutspaltkanäle bzw. der Nut-Kühlpfade. Die Nut-Kühlpfade sind Teil einer Leiterdirektkühlung. Insbesondere ist an den Stirnseiten des Statorblechpakets kein Ringverteiler zum Verteilen des Kühlmediums in die Nutspaltkanäle und/oder kein Ringsammler zum Sammeln des aus den Nutspaltkanälen austretenden Kühlmediums erforderlich, was eine Abdichtung eines Statorraums gegenüber einem Rotorraum der elektrischen Maschine, beispielsweise mittels einer Hülse oder eines Spaltrohres, erfordern würde. Weiterhin ermöglicht die erfindungsgemäße Strömungsanbindung der Nutspaltkanäle einen geringeren Druck im Kühlpfad, so dass die Anforderungen an die Abdichtung der Nutspaltkanäle verringert werden. Darüber hinaus wird der Druckverlust im jeweiligen Kühlpfad verringert, da der jeweilige Kühlpfad nicht über die gesamte Länge, sondern nur über eine axiale Teilstrecke der jeweiligen Statornut verläuft.

Dies wird erfindungsgemäß erreicht, indem im Statorblechpaket zumindest ein Versorgungspfad ausgebildet ist, der zur Kühlmediumversorgung der Nut-Kühlpfade vorgesehen ist und jeweils über einen Nut-Zulauf in die Statornuten mündet, und indem in der jeweiligen Statornut ausgehend vom jeweiligen Nut-Zulauf zwei in entgegengesetzte Richtung verlaufende Nut-Kühlpfade vorgesehen sind, die an den Enden der jeweiligen Statornut über einen Nut-Ablauf als Freistrahl austreten, insbesondere im Nutkopf oder im Nutgrund.

Zumindest einige der Nut-Abläufe sind beispielsweise derart angeordnet, dass der jeweilige Wickelkopf der Statorwicklung von dem jeweiligen Freistrahl benetzt und dadurch gekühlt wird. Der jeweilige Wickelkopf der Statorwicklung kann zur weiteren Verbesserung der Wickelkopf-Kühlung zusätzlich mit Kühlfluid besprüht werden, das aus einem Kühlkanal eines Rotors oder eines Gehäuse der elektrischen Maschine versprüht oder verspritzt wird.

Durch die in den Unteransprüchen aufgeführten Maßnahmen sind vorteilhafte Weiterbildungen und Verbesserungen des im Hauptanspruch angegebenen Stators möglich.

Erfindungsgemäß ist vorgesehen, dass der jeweilige Nut-Kühlpfad an den Stützstellen zumindest verengt ist, wobei an den Stützstellen jeweils ein Bypass vorgesehen ist, um das Kühlmedium an der jeweiligen verengten Stützstelle vorbeizuleiten, wobei die Bypässe der jeweiligen Statornut ausgehend vom jeweiligen Nut-Zulauf entlang des jeweiligen Nut-Kühlpfads abwechselnd im Nutgrund oder im Nutkopf ausgebildet sind, insbesondere zur Bildung von mäanderförmigen Nut-Kühlpfaden. Auf diese Weise wird die Kühlung des Leiters bzw. Leiterbündels in der jeweiligen Statornut verbessert.

Auch vorteilhaft ist, wenn die vom jeweiligen Nut-Zulauf aus gesehen in Strömungsrichtung ersten Bypässe der jeweiligen Statornut im Nutkopf vorgesehen sind. Auf diese Weise wird ein erster Mäanderabschnitt im jeweiligen Nut-Kühlpfad erzeugt und somit die Kühlung des Leiters bzw. Leiterbündels verbessert.

Sehr vorteilhaft ist, wenn der jeweilige Nut-Zulauf in einem mittleren Axialabschnitt der jeweiligen Statornut, insbesondere in der axialen Mitte, in den Nutgrund der jeweiligen Statornut mündet. Auf diese Weise wird der Leiter bzw. das Leiterbündel in der jeweiligen Statornut entlang seiner axialen Erstreckung gleichmäßig gekühlt.

Des Weiteren vorteilhaft ist, wenn der jeweilige Nut-Zulauf in der jeweiligen Statornut zwischen zwei Stützstellen liegt, deren axialer Abstand zueinander geringer ausgebildet ist als der Abstand von übrigen benachbarten Stützstellen. Auf diese Weise werden die dem Nutgrund abgewandten Leiter eines Leiterbündels im Bereich des Nut-Zulaufes besser gekühlt.

Nach einer ersten Strömungsführungs-Variante kann für alle Statornuten ein gleicher Verlauf der Nut-Kühlpfade vorgesehen sein. Alternativ können an demselben Stator nach einer zweiten Strömungsführungs-Variante für einen ersten Satz von Statornuten erste Nut-Kühlpfade und für einen zweiten Satz von Statornuten zu den ersten Nutkühlpfaden in radialer Richtung gegensätzlich verlaufende zweite Nut-Kühlpfade vorgesehen sein. Radial gegensätzliche und in die gleiche Axialrichtung verlaufende Nut-Kühlpfade haben an der gleichen axialen Stützstelle radial gegensätzliche Bypässe, also in dem einen Nut-Kühlpfad im Nutgrund und in dem anderen Nut-Kühlpfad im Nutkopf.

Nach der ersten Strömungsführungs-Variante können die zwei pro Statornut in entgegengesetzte Richtung verlaufenden Nut-Kühlpfade nach einer ersten Ausführung mittels eines gemeinsamen Nut-Zulaufes oder nach einer zweiten Ausführung mittels von zwei separaten, durch eine der Stützstellen voneinander getrennten Nut-Zuläufen mit Kühlmedium versorgt werden. Die erste Ausführung kann beispielsweise für eine gerade Anzahl von Stützstellen pro Statornut und die zweite Ausführung für eine ungerade Anzahl von Stützstellen pro Statornut vorgesehen sein.

Nach der zweiten Strömungsführungs-Variante können die ersten Nut-Kühlpfade des ersten Satzes von Statornuten über erste Nut-Zuläufe und die zweiten Nut-Kühlpfade des zweiten Satzes von Statornuten über zweite Nut-Zuläufe mit Kühlmedium versorgbar sein, wobei in axialer Richtung zwischen den ersten und zweiten Nut-Zuläufen ein axialer Versatz, insbesondere eine Stützstelle, vorgesehen ist. Auf diese Weise werden im Stator in radialer Richtung gegensätzlich verlaufende Nut-Kühlpfade erzeugt.

Besonders vorteilhaft ist, wenn die Statornuten zur Abdichtung der Nut-Kühlpfade mittels zumindest eines Nutverschlusses verschlossen sind.

Die Statornuten können im Nutkopf vorteilhafterweise Nutschlitze aufweisen. Nach einer ersten Nutverschluss-Variante kann in jedem Nutschlitz ein streifenförmiger Nutverschluss, insbesondere ein Deckschieber, als separates Element vorgesehen sein. Alternativ kann als zweite Nutverschluss-Variante ein einziger hülsen- oder rohrförmiger Nutverschluss als separates Element zum Verschließen aller Nutschlitze ausgeführt sein. Auf diese Weise werden die Nut-Kühlpfade gegenüber dem Luftstpalt weitestgehend abgedichtet. Vorteilhaft im Falle der Deckschieber ist, dass diese nicht im Luftspalt der elektrischen Maschine angeordnet sind. Das teilweise Anordnen des Nutverschlusses würde den Luftspalt nachteilig vergrößern.

Nach einer dritten Nutverschluss-Variante können die Nutverschlüsse jeweils durch eine Zahnkopfbrücke gebildet sein, die Teil einer der Blechlamellen ist, Zahnköpfe von benachbarten Statorzähnen verbindet und insbesondere eine verringerte magnetische Leitfähigkeit aufweist. Dies hat den Vorteil, dass der Nutverschluss ohne zusätzliches Bauteil erreicht wird und außerdem nicht im Luftspalt der elektrischen Maschine angeordnet ist.

Außerdem vorteilhaft ist, wenn der jeweilige Nutverschluss mehrere in axialer Richtung voneinander beabstandete Versperrungen für den jeweiligen Nut-Kühlpfad aufweist, die insbesondere bis an den Leiter bzw. das Leiterbündel reichen, und dass zwischen benachbarten Versperrungen derselben Statornut jeweils ein Durchlass als Bypass für den jeweiligen Nut-Kühlpfad gebildet ist. Auf diese Weise können im oder am Nutverschluss Bypässe zur Umströmung der erfindungsgemäßen Stützstellen erzeugt werden.

Der jeweilige Bypass im Nutkopf kann vorteilhafterweise gebildet sein durch
eine Vertiefung im Nutverschluss, die gegenüber benachbarten Versperrungen derselben Statornut vertieft ist, oder alternativ durch eine oder zwei Ausnehmungen in den Nutflanken am Fuße eines Zahnkopfes der Statorzähne. Die Vertiefung im Nutverschluss kann beispielsweise eine Ausnehmung, Ausformung oder Ausbuchtung sein.

Der jeweilige Bypass im Nutgrund kann vorteilhafterweise gebildet sein durch eine oder zwei Ausnehmungen in den Nutflanken am Fuße der Statorzähne oder durch eine Ausnehmung im Nutgrund.

Die Erfindung betrifft weiterhin eine elektrische Maschine mit einem erfindungsgemäßen Stator und mit einem Rotor, wobei der Rotor in einem zylinderförmigen Rotorraum und der Stator in einem den Rotorraum ringförmig umschließenden Statorraum angeordnet ist. Erfindungsgemäß sind der Statorraum und der Rotorraum räumlich ungetrennt voneinander und somit nicht gegeneinander abgedichtet. Dadurch kann das Kühlmedium, insbesondere ein Kühlfluid, der Nut-Kühlpfade auf einfache Weise in einem Sumpf aufgefangen und gesammelt werden.

Eine Abdichtung zwischen dem Stator- und Rotorraum, beispielsweise mittels eines sogenannten Spaltrohres, ist nicht erforderlich, so dass die Herstellungskosten der elektrischen Maschine verringert werden. Insbesondere ist an den Stirnseiten des Statorblechpakets kein Ringverteiler und/oder kein Ringsammler erforderlich, der einen der Wickelköpfe der Statorwicklung zu dessen Kühlung umschließt, gegenüber dem Rotorraum abgedichtet und zum Verteilen des Kühlmediums in die Nutspaltkanäle bzw. zum Sammeln des aus den Nutspaltkanälen austretenden Kühlmediums vorgesehen ist.

### Zeichnung

Ausführungsbeispiele der Erfindung sind in der Zeichnung vereinfacht dargestellt und in der nachfolgenden Beschreibung näher erläutert.

Es zeigen:
- Fig.1: eine Teilansicht eines erfindungsgemäßen Stators einer elektrischen Maschine,
- Fig.2: im Schnitt eine der Statornuten des Stators nach Fig.1 mit einem erfindungsgemäß an mehreren Stützstellen gelagerten Leiterbündel,
- Fig.3: eine Ansicht einer erfindungsgemäßen Stützstelle nach Fig.2,
- Fig.4: eine erste Ausführung des Stators nach Fig.1 und Fig.2 im Schnitt entlang einer Linie IV-IV in Fig.2 mit erfindungsgemäßen Nut-Kühlpfaden, die einen gemeinsamen Nut-Zulauf haben,
- Fig.5: eine zweite Ausführung des Stators nach Fig.1 und Fig.2 im Schnitt entlang einer Linie IV-IV in Fig.2 mit erfindungsgemäßen Nut-Kühlpfaden, die einen gemeinsamen Nut-Zulauf haben,
- Fig.6: eine dritte Ausführung des Stators nach Fig.1 und Fig.2 im Schnitt entlang einer Linie IV-IV in Fig.2 mit erfindungsgemäßen Nut-Kühlpfaden, die separate Nut-Zuläufe haben,
- Fig.7: gemäß einer vierten Ausführung eine Statornut eines ersten Satzes von Statornuten des Stators nach Fig.1 und Fig.2 mit erfindungsgemäßen Nut-Kühlpfaden, die einen gemeinsamen Nut-Zulauf haben,
- Fig.8: gemäß der vierten Ausführung eine Statornut eines zweiten Satzes von Statornuten des Stators nach Fig.1 und Fig.2 mit erfindungsgemäßen Nut-Kühlpfaden, die einen gemeinsamen Nut-Zulauf haben,
- Fig.9A: einen Schnitt entlang der Linie IX-IX in Fig.4 für eine Ausführung des Stators mit einem hülsenförmigen Nutverschluss,
- Fig.9B: einen Schnitt entlang der Linie IX-IX in Fig.4 für eine Ausführung des Stators mit streifenförmigen Deckschiebern als Nutverschlüssen,
- Fig.9C: einen Schnitt entlang der Linie IX-IX in Fig.4 für eine Ausführung des Stators mit Zahnkopfbrücken als Nutverschlüssen,
- Fig.10A: einen Schnitt entlang der Linie X-X in Fig.4 für eine Ausführung des Stators mit einem hülsenförmigen Nutverschluss,
- Fig.10B: einen Schnitt entlang der Linie X-X in Fig.4 für eine Ausführung des Stators mit streifenförmigen Deckschiebern als Nutverschlüssen,
- Fig.10C: einen Schnitt entlang der Linie X-X in Fig.4 für eine Ausführung des Stators mit Zahnkopfbrücken als Nutverschlüssen,
- Fig.11A: einen Schnitt entlang der Linie XI-XI in Fig.4 für eine Ausführung des Stators mit einem hülsenförmigen Nutverschluss,
- Fig.11B: einen Schnitt entlang der Linie XI-XI in Fig.4 für eine Ausführung des Stators mit streifenförmigen Deckschiebern als Nutverschlüssen,
- Fig.11C: einen Schnitt entlang der Linie XI-XI in Fig.4 für eine Ausführung des Stators mit Zahnkopfbrücken als Nutverschlüssen und
- Fig.12: eine elektrische Maschine umfassend einen erfindungsgemäßen Stator und einen Rotor.

### Beschreibung der Ausführungsbeispiele

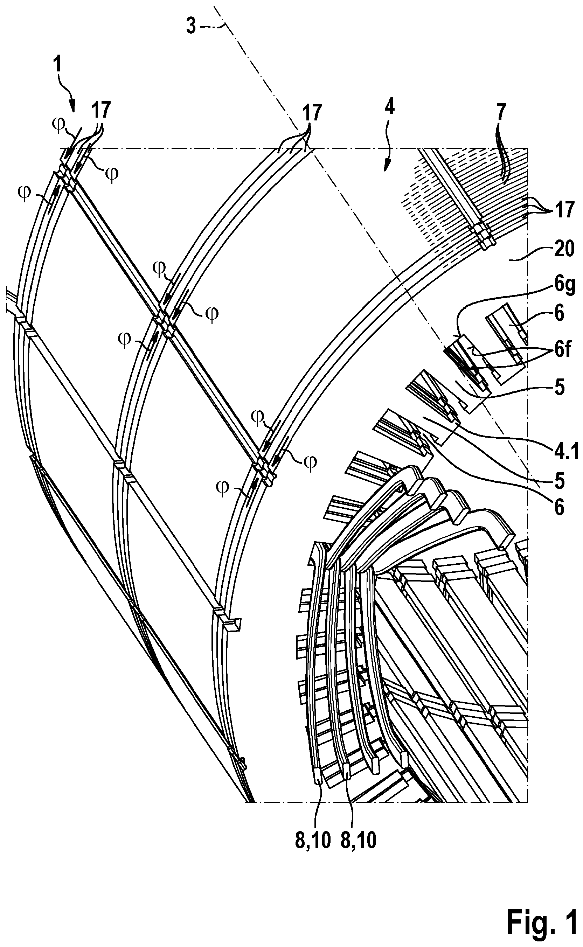

Fig.1 zeigt eine Teilansicht eines erfindungsgemäßen Stators einer elektrischen Maschine.

Der erfindungsgemäße Stator 1 der elektrischen Maschine 2 hat eine Statorachse 3 und weist ein Statorblechpaket 4 auf, an dem Statorzähne 5 und zwischen den Statorzähnen 5 liegende Statornuten 6 ausgebildet sind und das eine Vielzahl von Blechlamellen 7 umfasst. Die Statorzähne 5 des Stators 1 sind beispielsweise über ein Statorjoch 20 miteinander verbunden. In den Statornuten 6 ist jeweils ein einziger Leiter 8 oder ein mehrere Leiter 8 umfassendes Leiterbündel 9, insbesondere ein Stapel von Flachdrahtleitern, zur Bildung einer elektrischen Statorwicklung 10 vorgesehen. In Fig.1 ist zur Vereinfachung der Darstellung nur in einer der Statornuten 6 ein Leiterbündel 9 dargestellt. Der jeweilige Leiter 8 hat eine nicht dargestellte Lackisolation.

Die Statornuten 6 erstrecken sich in radialer Richtung bezüglich der Statorachse 3 jeweils zwischen einem dem Statorjoch 20 zugewandten Nutgrund 6g und einem dem Nutgrund 6g abgewandten Nutkopf 6h. Unter dem Nutkopf 6g ist ein dem Nutgrund 6g abgewandter radialer Teil der Statornut 6 zu verstehen, der beispielsweise im Bereich des radial innersten Leiters 8 des Leiterbündels 9 liegt und auch einen Nutschlitz 6s der Statornut 6 umfassen kann.

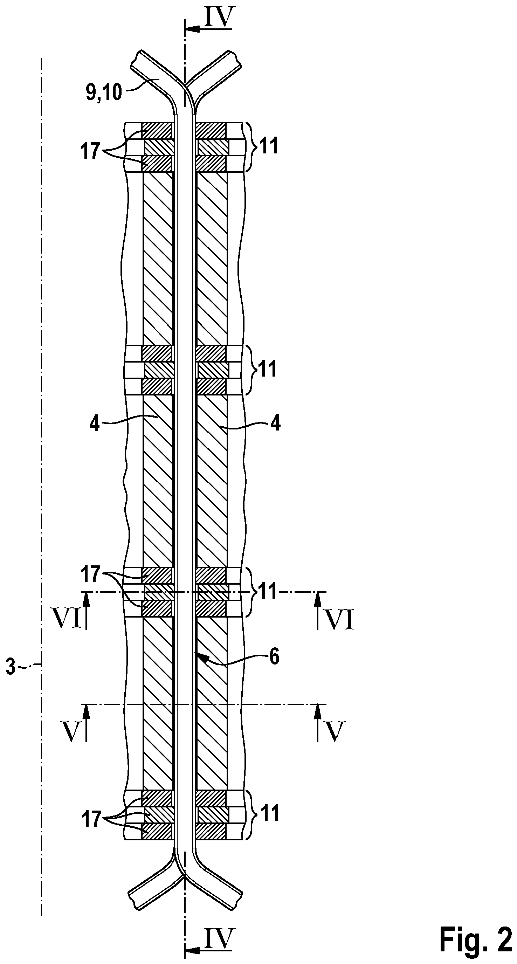

Fig.2 zeigt im Schnitt eine der Statornuten des Stators nach Fig.1 mit einem erfindungsgemäß an mehreren Stützstellen gelagerten Leiterbündel.

In den Statornuten 6 sind jeweils mehrere, in axialer Richtung bezüglich der Statorachse 3 voneinander beabstandete Stützstellen 11 zur Einklemmung und Halterung des in der jeweiligen Statornut 6 liegenden Leiters 8 bzw. Leiterbündels 9 gebildet.

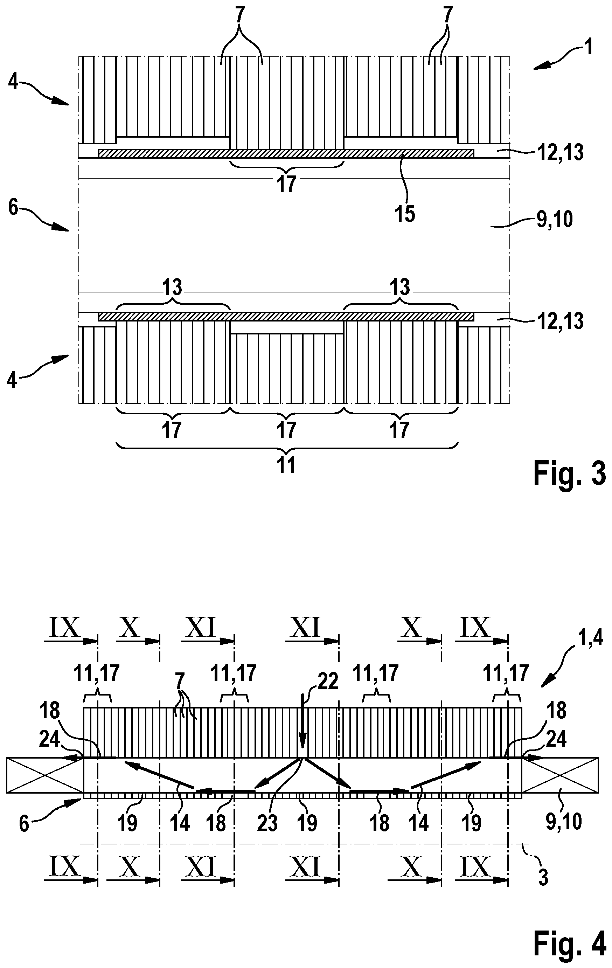

Fig.3 zeigt eine Ansicht einer erfindungsgemäßen Stützstelle nach Fig.2.

Erfindungsgemäß ist vorgesehen, dass die Stützstellen 11 jeweils durch das Verdrehen von einzelnen oder mehreren Blechlamellen 7 des Statorblechpakets 4, insbesondere von einer Gruppe 17 oder von mehreren Gruppen 17 von Blechlamellen 7, gebildet sind.

Die verdrehten Blechlamellen 7 sind zur Bildung einer einzelnen der Stützstellen 11 gegenüber den übrigen Blechlamellen 7 des Statorblechpaketes 4 um die Statorachse 3 verdreht (in entgegengesetzter Richtung), beispielsweise um einen bestimmten Verdrehwinkel ϕ. Die jeweilige Stützstelle 11 ist nach Fig.3 beispielsweise gebildet durch zwei Gruppen 17 von Blechlamellen 7, die in entgegengesetzter Richtung um den bestimmten Verdrehwinkel ϕ um die Statorachse 3 verdreht sind. Zwischen den erfindungsgemäßen Stützstellen 11 sind der Leiter 8 bzw. das Leiterbündel 9 der jeweiligen Statornut 6 frei schwebend, also ohne Kontakt zum Statorblechpaket 4, gelagert. Der Leiter 8 bzw. das Leiterbündel 9 der jeweiligen Statornut 6 ist also nur an den Stützstellen 11 mit dem Statorblechpaket 4 in Kontakt.

Durch das entgegengesetzte Verdrehen der Blechlamellen 7 zur Bildung der jeweiligen Stützstelle 11 werden Stützabschnitte der Blechlamellen 7 gebildet, die von gegenüberliegenden Seiten der jeweiligen Statornut 6 in die jeweilige Statornut 6 vorstehen, um den Leiter 8 bzw. das Leiterbündel 9 zwischen den Stützabschnitten an Klemmflächen des Leiters 8 bzw. Leiterbündels 9 einzuklemmen. Der Leiter 8 bzw. das Leiterbündel 9 der jeweiligen Statornut 6 kann an den Klemmflächen der jeweiligen Stützstelle 11 zumindest eine erhabene Schutzschicht 15 aufweisen. Die verdrehten Blechlamellen 7 sind im Statorblechpaket 4 gegen weiteres Verdrehen fixiert, beispielsweise durch stoffschlüssiges Fügen von Blechlamellen 7, insbesondere durch Schweißen.

Zwischen den Nutflanken 6f der jeweiligen Statornut 6 und dem in der Statornut 6 angeordneten Leiter 8 bzw. Leiterbündel 9 ist zumindest ein Nutspalt 12 vorgesehen, der einen sich in axialer Richtung erstreckenden Nutspaltkanal 13 bildet. Der jeweilige Nutspaltkanal 13 ist entlang eines Nut-Kühlpfads 14 von einem Kühlmedium, das insbesondere ein Kühlfluid ist, beispielsweise Öl, durchströmbar und insbesondere beidseitig des Leiters 8 bzw. Leiterbündels 9 zu beiden Nutflanken 6f hin ausgebildet.

Fig.4 zeigt eine erste Ausführung des Stators nach Fig.1 und Fig.2 im Schnitt entlang einer Linie IV-IV in Fig.2 mit erfindungsgemäßen Nut-Kühlpfaden, die einen gemeinsamen Nut-Zulauf haben.

Weiterhin ist erfindungsgemäß vorgesehen, dass im Statorblechpaket 4 zumindest ein Versorgungspfad 22 ausgebildet ist, der zur Kühlmediumversorgung der Nut-Kühlpfade 14 vorgesehen ist und jeweils über einen Nut-Zulauf 23 in die Statornuten 6 mündet. Der jeweilige Versorgungspfad 22 verläuft im Statorblechpaket 4 zumindest an einem dem jeweiligen Nut-Zulauf 23 zugewandten Ende in radialer Richtung.

Erfindungsgemäß sind in der jeweiligen Statornut 6 ausgehend vom jeweiligen Nut-Zulauf 23 zwei in entgegengesetzte Richtung verlaufende Nut-Kühlpfade 14 vorgesehen, die an den Enden der jeweiligen Statornut 6 über einen Nut-Ablauf 24 als Freistrahl austreten, insbesondere im Nutgrund 6g oder im Nutkopf 6h.

Der jeweilige Nut-Kühlpfad 14 ist an den Stützstellen 11 zumindest verengt, wobei an den Stützstellen 11 jeweils ein Bypass 18 vorgesehen ist, um das Kühlmedium an der jeweiligen verengten Stützstelle 11 vorbeizuleiten. Die Bypässe 18 der jeweiligen Statornut 6 sind dabei ausgehend vom jeweiligen Nut-Zulauf 23 entlang des jeweiligen Nut-Kühlpfads 14 abwechselnd im Nutgrund 6g oder im Nutkopf 6h ausgebildet, wodurch ein mäanderförmiger Verlauf der Nut-Kühlpfade 14 erzielbar ist.

Die vom jeweiligen Nut-Zulauf 23 aus gesehen in Strömungsrichtung ersten Bypässe 18 der jeweiligen Statornut 6 sind beispielsweise im Nutkopf 6h vorgesehen.

Der jeweilige Nut-Zulauf 23 mündet in einem mittleren Axialabschnitt der jeweiligen Statornut 6, insbesondere in der axialen Mitte, in den Nutgrund 6g der jeweiligen Statornut 6.

Zwischen benachbarten Stützstellen 11 sind nach der ersten Ausführung des Stators 1 beispielsweise gleiche axiale Abstände d vorgesehen.

Nach einer ersten Strömungsführungs-Variante kann für alle Statornuten 6 ein gleicher Verlauf der Nut-Kühlpfade 14 vorgesehen sein. Ein solcher beispielhafter Verlauf ist in Fig.4 gezeigt.

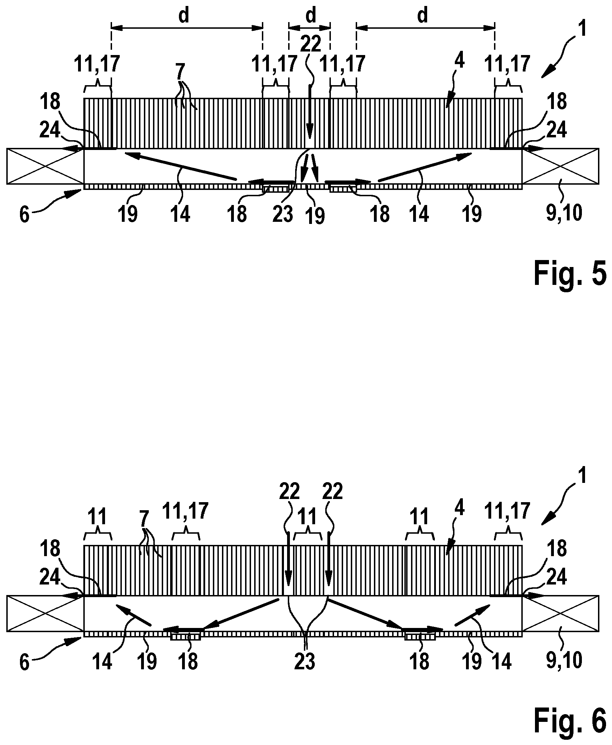

Fig.5 zeigt eine zweite Ausführung des Stators nach Fig.1 und Fig.2 im Schnitt entlang einer Linie IV-IV in Fig.2 mit erfindungsgemäßen Nut-Kühlpfaden, die einen gemeinsamen Nut-Zulauf haben.

Nach der zweiten Ausführung des Stators 1 liegt der jeweilige Nut-Zulauf 23 der jeweiligen Statornut 6 zwischen zwei Stützstellen 11, deren axialer Abstand d zueinander geringer ausgebildet ist als der Abstand d von übrigen benachbarten Stützstellen 11.

Fig.6 zeigt eine dritte Ausführung des Stators nach Fig.1 und Fig.2 im Schnitt entlang einer Linie IV-IV in Fig.2 mit erfindungsgemäßen Nut-Kühlpfaden, die separate Nut-Zuläufe haben.

Nach Fig.4 und Fig.5 sind pro Statornut 6 Nut-Kühlpfade 14 vorgesehen, die einen gemeinsamen Nut-Zulauf 23 haben. Alternativ können pro Statornut 6 Nut-Kühlpfade 14 ausgeführt sein, die separate Nut-Zuläufe 23 haben. Die separaten Nut-Zuläufe 23 sind beispielsweise durch eine Stützstelle 11 voneinander getrennt.

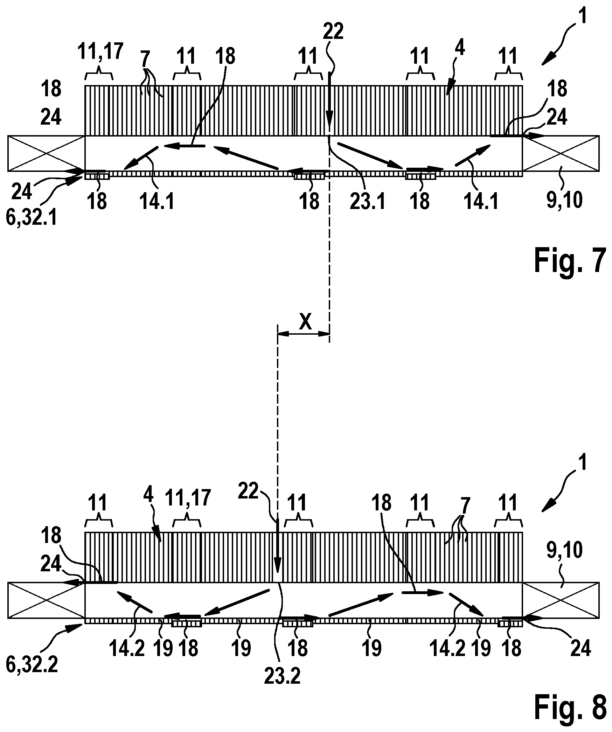

Fig.7 zeigt gemäß einer vierten Ausführung eine Statornut eines ersten Satzes von Statornuten des Stators nach Fig.1 und Fig.2 mit erfindungsgemäßen Nut-Kühlpfaden, die einen gemeinsamen Nut-Zulauf haben.

Fig.8 zeigt gemäß der vierten Ausführung eine Statornut eines zweiten Satzes von Statornuten des Stators nach Fig.1 und Fig.2 mit erfindungsgemäßen Nut-Kühlpfaden, die einen gemeinsamen Nut-Zulauf haben.

Nach einer zweiten Strömungsführungs-Variante können am selben Stator 1 für einen ersten Satz 32.1 von Statornuten 6 erste Nut-Kühlpfade 14.1 nach Fig.7 und für einen zweiten Satz 32.2 von Statornuten 6 in radialer Richtung gegensätzlich verlaufende zweite Nut-Kühlpfade 14.2 nach Fig.8 vorgesehen sein. Radial gegensätzliche, in die gleiche Axialrichtung verlaufende Nut-Kühlpfade 14 haben an der gleichen axialen Stützstelle 11 radial gegensätzliche Bypässe 18, also in dem einen Nut-Kühlpfad 14.1,14.2 im Nutgrund 6g und in dem anderen Nut-Kühlpfad 14.2,14.1 im Nutkopf 6h. Der radial gegensätzliche Verlauf der Nut-Kühlpfade 14 wird durch einen axialen Versatz X der Nut-Zuläufe 23 erreicht.

Die ersten Nut-Kühlpfade 14.1 des ersten Satzes 32.1 von Statornuten 6 haben also erste Nut-Zuläufe 23.1 und die zweiten Nut-Kühlpfade 14.2 des zweiten Satzes 32.2 von Statornuten 6 zweite Nut-Zuläufe 23.2, wobei in axialer Richtung zwischen den ersten und zweiten Nut-Zuläufen 23.1,23.2 der axiale Versatz X, insbesondere eine Stützstelle, vorgesehen ist.

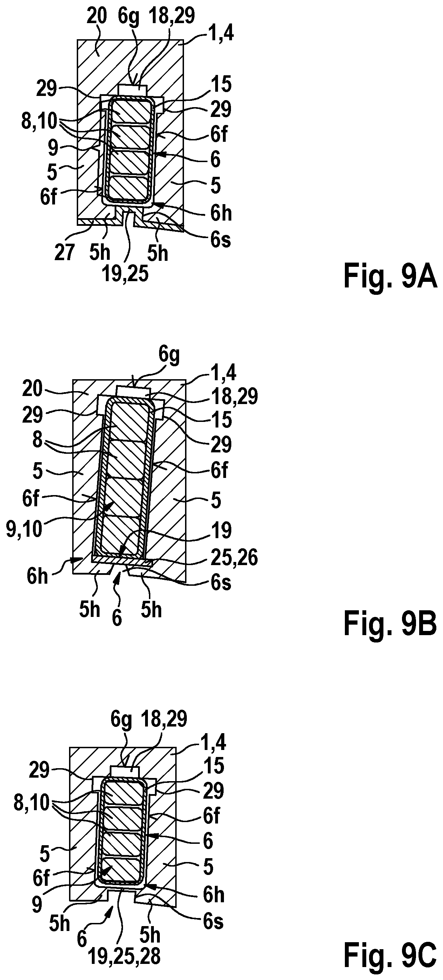

Der jeweilige Bypass 18 im Nutgrund 6g kann nach den Fig.9A, Fig.9B und Fig.9C beispielsweise gebildet sein durch eine oder zwei Ausnehmungen 29 in den Nutflanken 6f am Fuße der Statorzähne 5 oder eine Ausnehmung 29 im Nutgrund 6g.

Die Statornuten 6 des Stators 1 sind zur Abdichtung der Nut-Kühlpfade 14 mittels zumindest eines Nutverschlusses 25 verschlossen.

Die Statornuten 6 können im Nutkopf 6h Nutschlitze 6s aufweisen. In jedem Nutschlitz 6s kann nach einer ersten Nutverschluss-Variante ein streifenförmiger Nutverschluss 26, insbesondere ein Deckschieber, als separates Element vorgesehen sein. Alternativ kann nach einer zweiten Nutverschluss-Variante ein einziger hülsen- oder rohrförmiger Nutverschluss 27 als separates Element zum Verschließen aller Nutschlitze 6s ausgeführt sein.

Alternativ können die Nutverschlüsse 25 nach einer dritten Nutverschluss-Variante jeweils durch eine metallische Zahnkopfbrücke 28 gebildet sein, die Teil einer der Blechlamellen 7 ist, Zahnköpfe 5h von benachbarten Statorzähnen 5 verbindet und insbesondere eine verringerte magnetische Leitfähigkeit aufweist. Die verringerte magnetische Leitfähigkeit der Zahnkopfbrücke 28 kann beispielsweise durch eine Wärmebehandlung oder eine Kaltumformung der Zahnkopfbrücke 26 erreicht werden.

Der jeweilige Nutverschluss 25 hat jeweils mehrere in axialer Richtung voneinander beabstandete Versperrungen 19 für den jeweiligen Nut-Kühlpfad 14. Die Versperrungen 19 reichen insbesondere bis an den Leiter 8 bzw. das Leiterbündel 9 heran. Zwischen benachbarten Versperrungen 19 derselben Statornut 6 ist jeweils ein in axialer Richtung verlaufender Durchlass 18 als Bypass 18 für den jeweiligen Nut-Kühlpfad 14 gebildet.

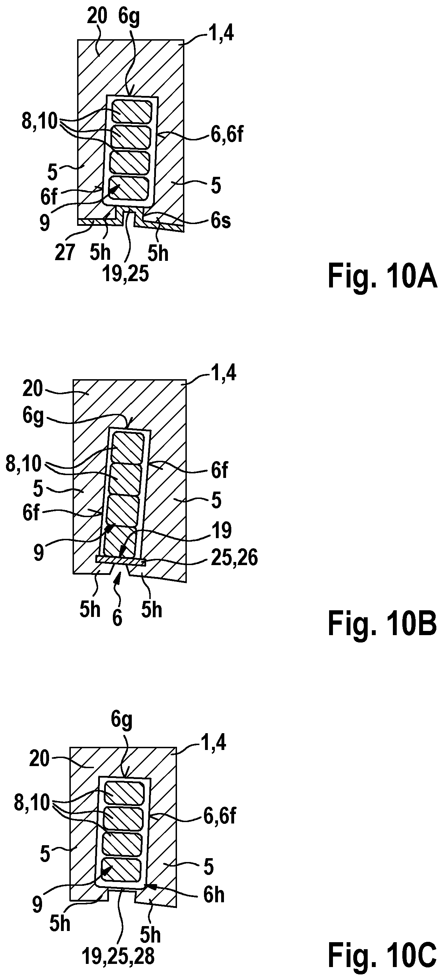

Fig.10A, Fig.10B und Fig.10C zeigen eine der Versperrungen 19 des jeweiligen Nutverschlusses 25 für die drei Nutverschluss-Varianten.

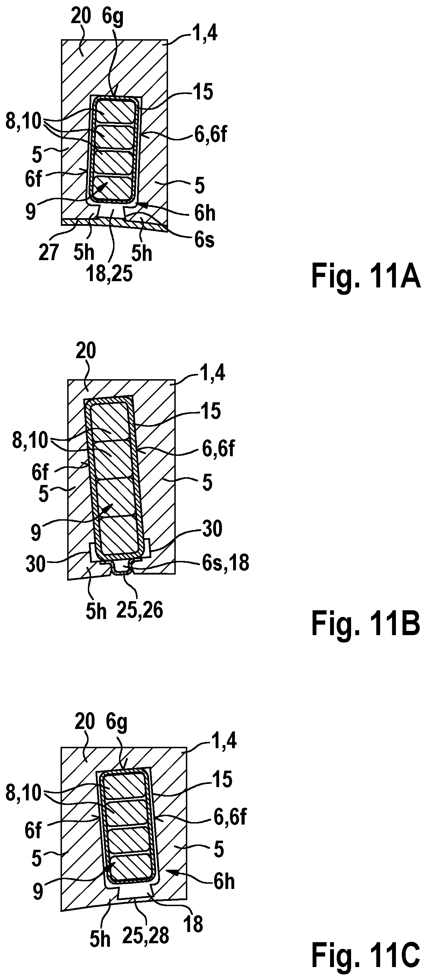

Der jeweilige Bypass 18 im Nutkopf 6h kann nach den Nutverschluss-Varianten gemäß Fig.11A, Fig.11B und Fig.11C gebildet sein durch eine im Nutverschluss 25,26,27 ausgeführte Vertiefung, die gegenüber benachbarten Versperrungen 19 derselben Statornut 6 vertieft ist. Die Vertiefungen im Nutverschluss 25 kann beispielsweise eine Ausnehmung, Ausformung, Ausbuchtung oder Sicke sein.

Alternativ oder zusätzlich kann der jeweilige Bypass 18 im Nutkopf 6h nach Fig.11B durch eine oder zwei Ausnehmungen 30 in den Nutflanken 6f am Fuße eines Zahnkopfes 6h der Statorzähne 6 gebildet sein.

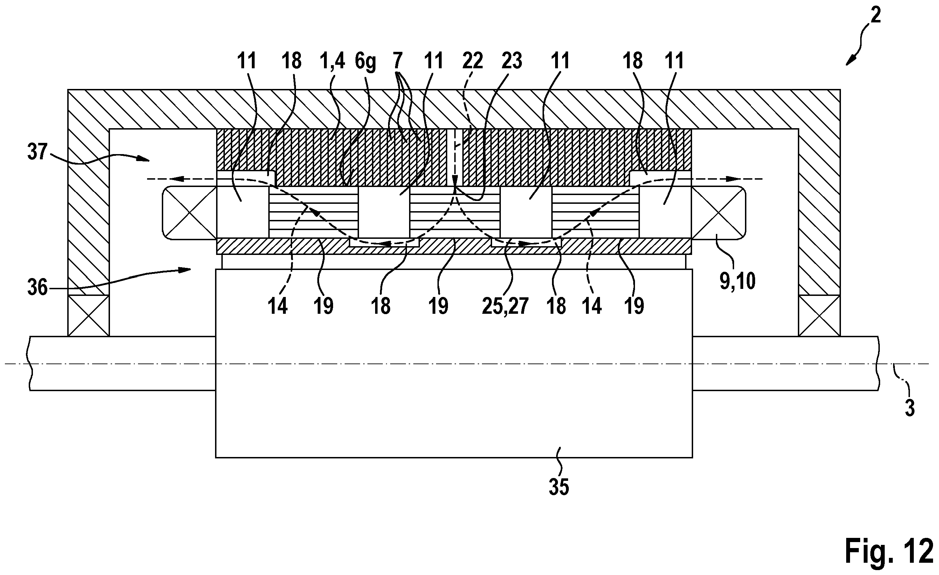

Fig.12 zeigt eine elektrische Maschine umfassend einen erfindungsgemäßen Stator 1 und einen Rotor 35.

Der Rotor 35 ist in einem zylinderförmigen Rotorraum 36 und der Stator 1 in einem den Rotorraum 36 ringförmig umschließenden Statorraum 37 angeordnet. Erfindungsgemäß ist vorgesehen, dass der Statorraum 37 und der Rotorraum 36 räumlich ungetrennt sind.

## Patentansprüche

1. Stator (1) einer elektrischen Maschine (2) mit einer Statorachse (3) und mit einem Statorblechpaket (4), an dem Statorzähne (5) und zwischen den Statorzähnen (5) liegende Statornuten (6) ausgebildet sind und das eine Vielzahl von Blechlamellen (7) umfasst, wobei sich die Statornuten (6) in radialer Richtung bezüglich der Statorachse (3) jeweils zwischen einem Nutgrund (6g) und einem Nutkopf (6h) erstrecken, wobei in den Statornuten (6) jeweils ein einziger Leiter (8) oder ein mehrere Leiter (8) umfassendes Leiterbündel (9), insbesondere ein Stapel von Flachdrahtleitern, zur Bildung einer elektrischen Statorwicklung (10) vorgesehen ist, wobei in den Statornuten (6) jeweils mehrere, in axialer Richtung bezüglich der Statorachse (3) voneinander beabstandete Stützstellen (11) zur Einklemmung des in der jeweiligen Statornut (6) liegenden Leiters (8) bzw. Leiterbündels (9) gebildet sind, wobei zwischen den Nutflanken (6f) der jeweiligen Statornut (6) und dem in der Statornut (6) angeordneten Leiter (8) bzw. Leiterbündel (9) zumindest ein Nutspalt (12) vorgesehen ist, der einen sich in axialer Richtung erstreckenden Nutspaltkanal (13) bildet, der entlang eines Nut-Kühlpfads (14) von einem Kühlmedium, insbesondere Öl, durchströmbar ist, wobei die Stützstellen (11) jeweils durch das Verdrehen von einzelnen oder mehreren Blechlamellen (7) des Statorblechpakets (4), insbesondere von einer Gruppe oder von mehreren Gruppen von Blechlamellen (7), gebildet sind,
**dadurch gekennzeichnet, dass**
- im Statorblechpaket (4) zumindest ein Versorgungspfad (22) ausgebildet ist, der zur Kühlmediumversorgung der Nut-Kühlpfade (14) vorgesehen ist und jeweils über einen Nut-Zulauf (23) in die Statornuten (6) mündet,
- in der jeweiligen Statornut (6) ausgehend vom jeweiligen Nut-Zulauf (23) zwei in entgegengesetzte Richtung verlaufende Nut-Kühlpfade (14) vorgesehen sind, die an den Enden der jeweiligen Statornut (6) über einen Nut-Ablauf (24) als Freistrahl austreten, insbesondere im Nutkopf (6h) oder im Nutgrund (6g),
- der jeweilige Nut-Kühlpfad (14) an den Stützstellen (11) zumindest verengt ist, wobei an den Stützstellen (11) jeweils ein Bypass (18) vorgesehen ist, um das Kühlmedium an der jeweiligen verengten Stützstelle (11) vorbeizuleiten, wobei die Bypässe (18) der jeweiligen Statornut (6) ausgehend vom jeweiligen Nut-Zulauf (23) entlang des jeweiligen Nut-Kühlpfads (14) abwechselnd im Nutgrund (6g) oder im Nutkopf (6h) ausgebildet sind, insbesondere zur Bildung von mäanderförmigen Nut-Kühlpfaden (14).

2. Stator nach Anspruch 1, **dadurch gekennzeichnet, dass** die vom jeweiligen Nut-Zulauf (23) aus gesehen in Strömungsrichtung ersten Bypässe (18) der jeweiligen Statornut (6) im Nutkopf (6h) vorgesehen sind.

3. Stator nach einem der vorhergehenden Ansprüche, **dadurch gekennzeichnet, dass** der jeweilige Nut-Zulauf (23) in einem mittleren Axialabschnitt der jeweiligen Statornut (6), insbesondere in der axialen Mitte, in den Nutgrund (6g) der jeweiligen Statornut (6) mündet.

4. Stator nach einem der vorhergehenden Ansprüche, **dadurch gekennzeichnet, dass** der jeweilige Nut-Zulauf (23) in der jeweiligen Statornut (6) zwischen zwei Stützstellen (11) liegt, deren axialer Abstand (d) zueinander geringer ausgebildet ist als der Abstand (d) von übrigen benachbarten Stützstellen (11).

5. Stator nach einem der vorhergehenden Ansprüche, **dadurch gekennzeichnet, dass**
a. für alle Statornuten (6) ein gleicher Verlauf der Nut-Kühlpfade (14) oder
b. für einen ersten Satz (32.1) von Statornuten (6) erste Nut-Kühlpfade (14.1) und für einen zweiten Satz (32.2) von Statornuten (6) in radialer Richtung gegensätzlich verlaufende zweite Nut-Kühlpfade (14.2) vorgesehen sind.

6. Stator nach Anspruch 5, **dadurch gekennzeichnet, dass** die zwei pro Statornut (6) in entgegengesetzte Richtung verlaufenden Nut-Kühlpfade (14) mittels von einem gemeinsamen Nut-Zulauf (23) oder mittels von zwei separaten, durch eine der Stützstellen (11) voneinander getrennten Nut-Zuläufen (23) mit Kühlmedium versorgbar sind.

7. Stator nach Anspruch 6, **dadurch gekennzeichnet, dass** die ersten Nut-Kühlpfade (14.1) des ersten Satzes (32.1) von Statornuten (6) über erste Nut-Zuläufe (23.1) und die zweiten Nut-Kühlpfade (14.2) des zweiten Satzes (32.2) von Statornuten (6) über zweite Nut-Zuläufe (23.2) mit Kühlmedium versorgbar sind, wobei in axialer Richtung zwischen den ersten und zweiten Nut-Zuläufen (23.1,23.2) ein axialer Versatz (X), insbesondere eine Stützstelle (11), vorgesehen ist.

8. Stator nach einem der vorhergehenden Ansprüche, **dadurch gekennzeichnet, dass** die Statornuten (6) zur Abdichtung der Nut-Kühlpfade (14) mittels zumindest eines Nutverschlusses (25) verschlossen sind, wobei
a. die Statornuten (6) im Nutkopf (6h) Nutschlitze (6s) aufweisen, wobei in jedem Nutschlitz (6s) ein streifenförmiger Nutverschluss (26), insbesondere ein Deckschieber, als separates Element vorgesehen ist oder wobei ein einziger hülsen- oder rohrförmiger Nutverschluss (27) als separates Element zum Verschließen aller Nutschlitze (6s) ausgeführt ist, oder
b. die Nutverschlüsse (25) jeweils durch eine Zahnkopfbrücke (28) gebildet sind, die Teil einer der Blechlamellen (7) ist, Zahnköpfe (5h) von benachbarten Statorzähnen (5) verbindet und insbesondere eine verringerte magnetische Leitfähigkeit aufweist.

9. Stator nach Anspruch 8, **dadurch gekennzeichnet, dass** der jeweilige Nutverschluss (25) mehrere in axialer Richtung voneinander beabstandete Versperrungen (19) für den jeweiligen Nut-Kühlpfad (14) aufweist, die insbesondere bis an den Leiter (8) bzw. das Leiterbündel (9) reichen, und dass zwischen benachbarten Versperrungen (19) derselben Statornut (6) jeweils ein Durchlass als Bypass (18) für den jeweiligen Nut-Kühlpfad (14) gebildet ist.

10. Stator nach einem der Ansprüche 1 bis 9, **dadurch gekennzeichnet, dass** der jeweilige Bypass (18) im Nutkopf (6h) gebildet ist durch
a. eine Vertiefung im Nutverschluss (25), die gegenüber benachbarten Versperrungen (19) vertieft ist, oder
b. eine oder zwei Ausnehmungen (30) in den Nutflanken (6f) am Fuße eines Zahnkopfes (5h) der Statorzähne (5).

11. Stator nach einem der Ansprüche 1 bis 10, **dadurch gekennzeichnet, dass** der jeweilige Bypass (18) im Nutgrund (6g) gebildet ist durch
a. eine oder zwei Ausnehmungen (29) in den Nutflanken (6f) am Fuße der Statorzähne (5) oder
b. durch eine Ausnehmung (29) im Nutgrund (6g).

12. Elektrische Maschine mit einem Stator (1) nach einem der vorhergehenden Ansprüche und mit einem Rotor (35), wobei der Rotor (35) in einem zylinderförmigen Rotorraum (36) und der Stator (1) in einem den Rotorraum (36) ringförmig umschließenden Statorraum (37) angeordnet ist, **dadurch gekennzeichnet, dass** der Statorraum (37) und der Rotorraum (36) räumlich ungetrennt sind.

## Claims

1. Stator (1) of an electrical machine (2) having a stator axis (3) and having a laminated stator core (4), on which stator teeth (5) and stator slots (6) lying between the stator teeth (5) are formed and which comprises a plurality of sheet metal laminations (7), wherein the stator slots (6) each extend between a slot base (6g) and a slot head (6h) in the radial direction with respect to the stator axis (3), wherein, in each of the stator slots (6), a single conductor (8) or a conductor bundle (9) comprising a plurality of conductors (8), in particular a stack of flat-wire conductors, is provided for forming an electrical stator winding (10), wherein, in each of the stator slots (6), a plurality of support points (11) spaced apart in the axial direction with respect to the stator axis (3) are formed to clamp the conductor (8) or conductor bundle (9) lying in the respective stator slot (6), wherein at least one slot gap (12) is provided between the slot flanks (6f) of the respective stator slot (6) and the conductor (8) or conductor bundle (9) arranged in the stator slot (6), which slot gap forms a slot gap channel (13) which extends in the axial direction and through which a cooling medium, in particular oil, can flow along a slot cooling path (14), wherein the support points (11) are each formed by rotating individual or a plurality of sheet metal laminations (7) of the laminated stator core (4), in particular of one group or of a plurality of groups of sheet metal laminations (7), **characterized in that**
- at least one supply path (22) is formed in the laminated stator core (4), which supply path is provided for supplying cooling medium to the slot cooling paths (14) and opens into the stator slots (6) in each case via a slot inlet (23),
- two slot cooling paths (14) running in the opposite direction are provided in the respective stator slot (6) proceeding from the respective slot inlet (23), the slot cooling paths emerging as a free jet at the ends of the respective stator slot (6) via a slot outlet (24), in particular in the slot head (6h) or in the slot base (6g),
- the respective slot cooling path (14) is at least constricted at the support points (11), wherein a bypass (18) is provided at each of the support points (11) in order to conduct the cooling medium past the respective constricted support point (11), wherein the bypasses (18) of the respective stator slot (6), proceeding from the respective slot inlet (23), are formed along the respective slot cooling path (14) alternately in the slot base (6g) or in the slot head (6h), in particular for forming meandering slot cooling paths (14).

2. Stator according to Claim 1, **characterized in that** the first bypasses (18) of the respective stator slot (6), as seen from the respective slot inlet (23) in the flow direction, are provided in the slot head (6h).

3. Stator according to either of the preceding claims, **characterized in that** the respective slot inlet (23) opens into the slot base (6g) of the respective stator slot (6) in a central axial portion of the respective stator slot (6), in particular in the axial centre.

4. Stator according to any of the preceding claims, **characterized in that** the respective slot inlet (23) in the respective stator slot (6) lies between two support points (11), the axial distance (d) of which from one another is formed to be smaller than the distance (d) from other adjacent support points (11).

5. Stator according to any of the preceding claims, **characterized in that**
a. an identical profile of the slot cooling paths (14) is provided for all stator slots (6) or
b. first slot cooling paths (14.1) are provided for a first set (32.1) of stator slots (6) and second slot cooling paths (14.2) running in opposite directions in the radial direction are provided for a second set (32.2) of stator slots (6).

6. Stator according to Claim 5, **characterized in that** the two slot cooling paths (14) running in the opposite direction per stator slot (6) can be supplied with cooling medium by means of a common slot inlet (23) or by means of two separate slot inlets (23) separated from one another by one of the support points (11).

7. Stator according to Claim 6, **characterized in that** the first slot cooling paths (14.1) of the first set (32.1) of stator slots (6) can be supplied with cooling medium via first slot inlets (23.1) and the second slot cooling paths (14.2) of the second set (32.2) of stator slots (6) can be supplied with cooling medium via second slot inlets (23.2), wherein an axial offset (X), in particular a support point (11), is provided in the axial direction between the first and second slot inlets (23.1, 23.2).

8. Stator according to any of the preceding claims, **characterized in that** the stator slots (6) for sealing off the slot cooling paths (14) are closed by means of at least one slot closure (25), wherein
a. the stator slots (6) in the slot head (6h) have slot openings (6s), wherein a strip-shaped slot closure (26), in particular a covering slide, is provided as a separate element in each slot opening (6s), or wherein a single sleeve-like or tubular slot closure (27) is designed as a separate element for closing all slot openings (6s), or
b. the slot closures (25) are each formed by a tooth head bridge (28) which is part of one of the sheet-metal laminations (7), connects tooth heads (5h) of adjacent stator teeth (5) and in particular has a reduced magnetic conductivity.

9. Stator according to Claim 8, **characterized in that** the respective slot closure (25) has a plurality of blockers (19) for the respective slot cooling path (14), which blockers are spaced apart from one another in the axial direction and extend in particular as far as the conductor (8) or the conductor bundle (9), and **in that** a passage is formed in each case as a bypass (18) for the respective slot cooling path (14) between adjacent blockers (19) of the same stator slot (6).

10. Stator according to any of Claims 1 to 9, **characterized in that** the respective bypass (18) in the slot head (6h) is formed by
a. a depression in the slot closure (25), which depression is recessed with respect to adjacent blockers (19), or
b. one or two recesses (30) in the slot flanks (6f) at the foot of a tooth head (5h) of the stator teeth (5).

11. Stator according to any of Claims 1 to 10, **characterized in that** the respective bypass (18) is formed in the slot base (6g) by
a. one or two recesses (29) in the slot flanks (6f) at the foot of the stator teeth (5) or
b. by a recess (29) in the slot base (6g).

12. Electrical machine having a stator (1) according to any of the preceding claims and having a rotor (35), wherein the rotor (35) is arranged in a cylindrical rotor space (36) and the stator (1) is arranged in a stator space (37) annularly surrounding the rotor space (36), **characterized in that** the stator space (37) and the rotor space (36) are spatially unseparated.

## Revendications

1. Stator (1) d'une machine électrique (2) avec un axe de stator (3) et avec un empilage de tôles de stator (4), sur lequel sont formées des dents de stator (5) et des rainures de stator (6) situées entre les dents de stator (5) et qui comprend une pluralité de lamelles de tôle (7), les rainures de stator (6) s'étendant dans la direction radiale par rapport à l'axe de stator (3) respectivement entre un fond de rainure (6g) et une tête de rainure (6h), un unique conducteur (8) ou un faisceau de conducteurs (9) comprenant plusieurs conducteurs (8), en particulier une pile de fils conducteurs plats, étant prévu respectivement dans les rainures de stator (6) pour former un enroulement de stator électrique (10), plusieurs points d'appui (11) espacés les uns des autres dans la direction axiale par rapport à l'axe de stator (3) étant respectivement formés dans les rainures de stator (6) pour le serrage du conducteur (8) ou du faisceau de conducteurs (9) situé dans la rainure de stator (6) respective, au moins une fente de rainure (12) étant formée entre les flanc (6f) de la rainure de stator (6) respective et le conducteur (8) ou le faisceau de conducteurs (9) disposé dans la rainure de stator (6) respective, laquelle forme un canal de fente de rainure (13) s'étendant dans la direction axiale, qui peut être traversé le long d'un trajet de refroidissement de rainure (14) par un fluide de refroidissement, en particulier par de l'huile, les points d'appui (11) étant formés respectivement par la mise en rotation de lamelles de tôle (7) individuelles ou multiples de l'empilage de tôles de stator (4), en particulier d'un groupe ou de plusieurs groupes de lamelles de tôle (7),
**caractérisé en ce que**
- au moins un trajet d'alimentation (22) est formé dans l'empilage de tôles de stator (4), qui est prévu pour l'alimentation en fluide de refroidissement des trajets de refroidissement de rainure (14) et qui débouche respectivement dans les rainures de stator (6) par l'intermédiaire d'une entrée de rainure (23),
- dans la rainure de stator (6) respective, à partir de l'entrée de rainure (23) respective, sont prévus deux trajets de refroidissement de rainure (14) s'étendant dans des directions opposées, qui sortent en jet libre aux extrémités de la rainure de stator (6) respective par l'intermédiaire d'une sortie de rainure (24), en particulier dans la tête de rainure (6h) ou dans le fond de rainure (6g),
- le trajet de refroidissement de rainure (14) respectif au niveau des points d'appui (11) est au moins rétréci, une dérivation (18) étant respectivement prévue aux points d'appui (11) pour guider le fluide de refroidissement au-delà du point d'appui (11) rétréci respectif, les dérivations (18) de la rainure de stator (6) respective étant formées en alternance à partir de l'entrée de rainure (23) respective le long du trajet de refroidissement de rainure (14) respectif dans le fond de rainure (6g) ou dans la tête de rainure (6h), en particulier pour former des trajets de refroidissement de rainure (14) sinueux.

2. Stator selon la revendication 1, **caractérisé en ce que** les premières dérivations (18) de la rainure de stator (6) respective, vues dans le sens de l'écoulement depuis l'entrée de rainure (23) respective, sont prévues dans la tête de rainure (6h).

3. Stator selon l'une des revendications précédentes, **caractérisé en ce que** l'entrée de rainure (23) respective débouche dans une partie axiale médiane de la rainure de stator (6) respective, en particulier dans le milieu axial, dans le fond de rainure (6g) de la rainure de stator (6) respective.

4. Stator selon l'une des revendications précédentes, **caractérisé en ce que** l'entrée de rainure (23) respective se situe, dans la rainure de stator (6) respective, entre deux points d'appui (11) dont la distance axiale (d) l'un par rapport à l'autre est formée de façon à être inférieure à la distance (d) par rapport à d'autres points d'appui (11) adjacents.

5. Stator selon l'une des revendications précédentes, **caractérisé en ce que**
a. pour toutes les rainures de stator (6), un tracé identique des trajets de refroidissement de rainure (14) est prévu, ou
b. pour un premier jeu (32.1) de rainures de stator (6), des premiers trajets de refroidissement de rainure (14.1) et, pour un deuxième jeu (32.2) de rainures de stator (6), des deuxièmes trajets de refroidissement de rainure (14.2) s'étendant dans une direction radiale opposée sont prévus.

6. Stator selon la revendication 5, **caractérisé en ce que** les deux trajets de refroidissement de rainure (14) s'étendant dans des directions opposées par rainure de stator (6) peuvent être alimentés en fluide de refroidissement au moyen d'une entrée de rainure (23) commune ou au moyen de deux entrées de rainure (23) séparées, qui sont séparées l'une de l'autre par l'un des points d'appui (11).

7. Stator selon la revendication 6, **caractérisé en ce que** les premiers trajets de refroidissement de rainure (14.1) du premier jeu (32.1) de rainures de stator (6) peuvent être alimentés en fluide de refroidissement par l'intermédiaire de premières entrées de rainure (23.1) et les deuxièmes trajets de refroidissement de rainure (14.2) du deuxième jeu (32.2) de rainures de stator (6) peuvent être alimentés par l'intermédiaire de deuxièmes entrées de rainure (23.2), un décalage axial (X), en particulier un point d'appui (11), étant prévu dans la direction axiale entre les premières et deuxièmes entrées de rainure (23.1, 23.2).

8. Stator selon l'une des revendications précédentes, **caractérisé en ce que** les rainures de stator (6) sont fermées pour l'étanchéité des trajets de refroidissement de rainure (14) au moyen d'au moins une fermeture de rainure (25),
a. les rainures de stator (6) présentant dans la tête de rainure (6h) des fentes de rainure (6s), une fermeture de rainure en forme de bande (26), en particulier une fermeture glissante, étant prévue dans chaque fente de rainure (6s) comme élément séparé, ou une unique fermeture de rainure (27) en forme de douille ou de tube étant réalisée comme élément séparé pour fermer toutes les fentes de rainure (6s), ou
b. les fermetures de rainure (25) étant formées respectivement par un pont de tête de dent (28), qui fait partie de l'une des lamelles de tôle (7), relie les têtes de dents (5h) de dents de stator (5) adjacentes et présente en particulier une conductivité magnétique réduite.

9. Stator selon la revendication 8, **caractérisé en ce que** la fermeture de rainure (25) respective présente plusieurs obstructions (19) espacées les unes des autres dans la direction axiale pour le trajet de refroidissement de rainure (14) respectif, lesquelles s'étendent en particulier jusqu'au conducteur (8) ou au faisceau de conducteurs (9), et **en ce qu'**un passage est formé respectivement comme dérivation (18) pour le trajet de refroidissement de rainure (14) respectif entre des obstructions (19) adjacentes de la même rainure de stator (6).

10. Stator selon l'une des revendications 1 à 9, **caractérisé en ce que** la dérivation (18) respective dans la tête de rainure (6h) est formée par
a. un évidement dans la fermeture de rainure (25), qui est évidé par rapport à des obstructions (19) adjacentes, ou
b. un ou deux évidements (30) dans les flancs de rainure (6f) au pied d'une tête de dent (5h) des dents de stator (5).

11. Stator selon l'une des revendications 1 à 10, **caractérisé en ce que** la dérivation (18) respective dans le fond de rainure (6g) est formée par
a. un ou deux évidements (29) dans les flancs de rainure (6f) au pied des dents de stator (5), ou
b. par un évidement (29) dans le fond de rainure (6g).

12. Machine électrique comprenant un stator (1) selon l'une des revendications précédentes et comprenant un rotor (35), le rotor (35) étant disposé dans un espace de rotor cylindrique (36) et le stator (1) dans un espace de stator (37) entourant de manière annulaire l'espace de rotor (36), **caractérisée en ce que** l'espace de stator (37) et l'espace de rotor (36) ne sont pas spatialement séparés.
